# EUROPEAN PATENT SPECIFICATION

(11) **EP 0 538 538 B1**
(45) Date of publication and mention of the grant of the patent: **19.01.1994**
(21) Application number: 91610071.2
(22) Date of filing: 30.08.1991
(51) Int. Cl.: F24D 10/00

(54) **District heating pipe**
Fernheizrohr
Tube pour chauffage urbain

(43) Date of publication of application: 28.04.1993
(73) Proprietor: TARCO ENERGI A/S, DK-7000 Fredericia (DK)
(72) Inventor: Larsen, Christian Ting, DK-7000 Fredericia (DK)
(74) Representative: Jeppesen, Finn Heiden

(56) References cited:
- AT-B- 372 170
- GB-A- 2 181 437

## Description

The invention relates to a district heating pipe comprising a medium conveying pipe of PP, PB or cross-linked polyethylene (PEX), a heat isolation material in form of polyurethane foam, and a plastic jacket pipe, said medium preferably being hot water in the temperature range of 60°C to 100°C.

Medium conveying pipes of plastics are often used for connecting single-users to a large district heating system or with small distribution pipes conveying hot water. The conveying pipes are made of a heat-resistant plastic material, such as PP, PB or cross-linked polyethylene (PEX) isolated with polyurethane foam or another suitable isolation material and externally surrounded by a tight jacket of a plastic material.

Hitherto, the jacket pipe material has been made from PEH, PEL or co-polymerizates of ethylene and butyl acrylate (EBA).

Further, it is known from GB-A-2 181 437 to make medium conveying pipes of this type, the plastic jacket pipe thereof comprising silane cross-linked polyethylene.

It is known that rather heavy condensation may develop on the inner side of the jacket pipe under certain working conditions.

The condensation deposits as a several millimeter thick layer of water-saturated cells in the polyurethane foam.

The above is caused by the used plastic medium conveying pipe not being totally watertight with the result that water diffuses through the wall of the medium conveying pipe. As a result, the water condenses on the inner side of the jacket pipe.

Hitherto, the only way of solving this problem has been to regulate the working conditions such that the temperature on the medium conveying pipe is low and the temperature on the jacket pipe is as high as possible in order thereby to effect the relative diffusion rates.

As a result, unacceptably low working temperatures have been used, or it has been necessary to accept a certain water accumulation in the isolation material in the course of time and thereby a loss of isolation property.

The mentioned pipe dimensions are typical such that the diameter of the medium conveying pipe does not usually exceed 40 mm, and such that the diameter of the jacket pipe does not usually exceed 110 mm, as pipes of larger diameters are too rigid and thus impossible to handle in long wound up lengths, which in turn makes them expensive to use.

It has not been possible to explain why aqueous vapour some times does develop and some times does not develop under the inner surface of the jacket pipe in the hitherto known combinations of medium conveying pipes and jacket pipes.

However, measurings on typical pipes having medium conveying diameters of 22 mm and jacket pipe diameters of 64 mm of PEL reveal that the diffusion through the medium conveying pipe is approximately 0.06 g of water per day per meter of pipe, and approximately 0.02 g of water per day per meter of pipe through the jacket pipe.

During the measurings the temperature of the medium conveying pipe was 80°C and the temperature of the jacket pipe was 23°C.

As district heating pipes laid in the ground present a higher surface temperature than the surrounding soil, said pipes are often placed in a layer of dried sand, where the relative moisture is less than 100%. Naturally also the quality and general moisture of the soil influence the moisture degree of the soil immediately adjacent to the pipe wall.

Bearing in mind that the flux of water through a pipe wall is proportional to the diffusion coefficient of the material, proportional to the differential pressure of the aqueous vapour over the pipe wall and inversely proportional to the thickness of the pipe wall and that the vapour pressure of water around the usual working temperatures is heavily dependent upon the temperature, it is obvious that even small changes in the temperature of the medium conveying pipes can be decisive as to whether or not condensation develops on the inner side of the jacket pipe.

The object of the present invention is to solve this problem by using a special material presenting a particularly high water permeability, and which is also highly temperature-resistant and highly flexible, thus enabling the mentioned pipes to be wound up.

This is achieved with the district heating pipe of the unique claim.

By the use of a jacket pipe made from silane cross-linked polyehtylene butyl acrylate copolymer, where the copolymer contains more than 8 per cent of butyl acrylate it turned out that the water permeability is tenfold higher than the one of the polyethylene materials or polyethylene butyl acrylate copolymers hitherto used. A water flux through the jacket pipe material of 0.15 g of water per meter per day has been measured in a pipe of the same contruction as the one mentioned above.

As a result, pipes according to the present invention can be used under usual working conditions in a district heating system, that is with the medium temperatures fluctuating between 65°C and 85°C and the soil moisture fluctuating with the season without condensation developing on the pipe wall over a long period of time.

Under unfavourable conditions during the winter with high working temperatures and high soil moisture, a minor accumulation of aqueous vapour on the inner side of the jacket pipe develops, but this accumulation is counterbalanced during the summer where the working temperature is low and the soil moisture is low too.

When seen over a number of years the pipe stays generally dry and no appreciable loss of insulating property takes place.

The use of the jacket pipe materials hitherto known, viz. PEL and PEH is encumbered with the drawback that said materials are rather inflexible, which is why such pipes can be difficult to handle in cold weather, said pipes being delivered in long wound up lengths .

Beyond the solution to the diffusion problem, another advantage is obtained by the present invention in that the invented construction is considerably more flexible than the pipe construction hitherto known.

It turned out that EBA copolymers containing more than 8% of butyl acrylate present an E-module so low that the jacket pipe no longer effects the flexibility of the total construction significantly.

## Claims

1. A district heating pipe comprising a medium conveying pipe of PP, PB or cross-linked polyethylene (PEX), a heat isolation material in form of polyurethane foam and a plastic jacket pipe, said medium preferably being hot water in the temperature range of 60°C to 100°C, characterised in that the jacket pipe is adapted to allow a higher amount of aqueous vapour to escape through the jacket pipe wall compared to the amount of aqueous vapour added to the isolating foam by the water flux passing through the wall of the medium conveying pipe and the jacket pipe is made from silane cross-linked polyethylene butyl acrylate copolymer, where the copolymer contains more than 8 per cent of butyl acrylate.

## Patentansprüche

1. Fernheizrohr, das folgendes aufweist:
ein Rohr aus PP, PB oder vernetztem Polyethylen (PEX) zum Fördern eines Mediums, ein Wärmeisoliermaterial in Form von Polyurethanschaum und ein Kunststoffmantelrohr, wobei das Medium bevorzugt Heißwasser im Temperaturbereich von 60 °C bis 100 °C ist,
dadurch gekennzeichnet,
daß das Mantelrohr so ausgebildet ist, daß es eine größere Menge von Wasserdampf durch die Mantelrohrwand entweichen läßt, verglichen mit der Menge von Wasserdampf, die von dem Isolierschaum durch die Wasserströmung aufgenommen wird, die durch die Wand des Rohres zum Fördern eines Mediums hindurchgeht,
und daß das Mantelrohr aus mit Silan vernetztem Polyethylen-Butylacrylat-Copolymer besteht, wobei das Copolymer mehr als 8 % Butylacrylat enthält.

## Revendications

1. Conduite pour chauffage urbain comprenant un conduit pour l'écoulement d'un milieu, constitué de PP, PB ou de polyéthylène réticulé (PEX), un matériau thermiquement isolant sous la forme d'une mousse de polyuréthanne et une double-enveloppe plastifiée, ledit milieu étant de préférence de l'eau chaude à une température comprise entre 60 et 100°C, caractérisée en ce que la double-enveloppe de la conduite est ajustée de façon à permettre l'évacuation, à travers les parois de la double-enveloppe de la conduite, d'une plus grande quantité de vapeur d'eau comparée à la quantité de vapeur d'eau qui s'ajoute à la mousse isolante par passage du flux d'eau à travers les parois de la double-enveloppe de la conduite dans laquelle a lieu l'écoulement du milieu, la double enveloppe de la conduite étant constituée d'un copolymère polyéthylène réticulé au silane - acrylate de butyle, le copolymère contenant plus de 8% d'acrylate de butyle.
